# EUROPÄISCHE PATENTSCHRIFT

(11) **EP 3 142 802 B1**
(45) Veröffentlichungstag und Bekanntmachung des Hinweises auf die Patenterteilung: **18.11.2020**
(21) Anmeldenummer: 15723120.0
(22) Anmeldetag: 30.04.2015
(51) Int. Cl.: B07C 5/34, B67C 3/00, G01N 21/90

(54) **PRÜFVORRICHTUNG ZUM ÜBERPRÜFEN VON BEHÄLTERERZEUGNISSEN**
CONTROL SYSTEM FOR THE INVESTIGATION OF CONTAINERS
SYSTÈME DE CONTROLE POUR L'EXAMEN DE CONTENEURS

(30) Priorität: 13.05.2014 DE 102014006835
(43) Veröffentlichungstag der Anmeldung: 22.03.2017
(73) Patentinhaber: Kocher-Plastik Maschinenbau GmbH, 74429 Sulzbach-Laufen (DE)
(72) Erfinder: PRINZ, Heino, 74523 Schwäbisch Hall (DE)
(74) Vertreter: Bartels und Partner, Patentanwälte
(86) Internationale Anmeldenummer: PCT/EP2015/000883
(87) Internationale Veröffentlichungsnummer: WO 2015/172865

(56) Entgegenhaltungen:
- EP-A1- 2 458 367
- JP-A- H06 160 305
- JP-A- 2001 059 822
- US-A1- 2001 033 372

## Beschreibung

Die Erfindung betrifft eine Prüfvorrichtung zum Überprüfen von Behältererzeugnissen, vorzugsweise aus Kunststoffmaterialien bestehend und nach dem Blasform-, Füll- und Siegelverfahren hergestellt, gemäß der Merkmalsausgestaltung des Oberbegriffes des Patentanspruches 1.

Nach dem Blasform-, Füll- und Siegelverfahren, das fachsprachlich auch als BFS-Verfahren bezeichnet wird, hergestellte Behältererzeugnisse werden insbesondere in Ampullenform in großen Stückzahlen hergestellt, beispielsweise mittels des bekannten bottelpack®-Verfahrens. Derartige Ampullen dienen üblicherweise zur Aufnahme und Abgabe von Flüssigkeiten für therapeutische oder kosmetische Zwecke. Insbesondere bei Ampullen, die für Injektionszwecke vorgesehen sind, ist neben der Sterilität auch die Reinheit des Füllgutes, d.h. das Fehlen jedweder Schmutzpartikel, Grundvoraussetzung für die Benutzung. Im Hinblick auf die Produktsicherheit ist es daher unumgänglich, jedes Behältererzeugnis vor der Auslieferung auf einwandfreien Zustand des Füllgutes zu überprüfen. Bei den hohen Stückzahlen, in denen ampullenartige bzw. flaschenartige Behältererzeugnisse nach dem BFS-Verfahren hergestellt werden und der dadurch kurzen Taktzeiten beim Produktionsablauf, ist eine manuelle Überprüfung jedes Behälters kaum praktikabel, so dass man gezwungen ist, die Überprüfung mittels einer Prüfvorrichtung zu automatisieren.

Als diesbezüglichen Stand der Technik offenbart das Dokument DE 103 39 473 A1 eine Vorrichtung, bei der die Sensoreinrichtung zur Detektierung von Verschmutzungspartikeln mehrere Kameras sowie einen Schwenkspiegel aufweist, der von Leuchtmitteln erzeugte Lichtstrahlen nach Durchtritt aus einem Behälter auf betreffende Kameras reflektiert. Die bekannte Vorrichtung ist mit mehreren Nachteilen behaftet. Um bei hohen Produktionsgeschwindigkeiten jeden der Behälter, die aufrechtstehend auf einer Kreisbahn durch eine Prüfstrecke bewegt werden, von einer Kamera zu erfassen, sind eine größere Anzahl von Kameras und eine entsprechende Anzahl von Leuchtmitteln erforderlich, deren Strahlung während der kreisförmigen Bewegung auf jeweils zugeordnete Kameras reflektiert werden soll.

Neben dem hohen baulichen Aufwand ergibt sich ein entsprechender Steuerungsaufwand für die Schwenkbewegungen des Spiegels, die, um eine entsprechende Sicherheit der Prüfung zu ermöglichen, äußerst genau synchronisiert erfolgen müssen. Zudem lässt die Sicherheit des Prüfungsergebnisses zu wünschen übrig, weil bei der aufrecht stehenden Bewegung der Behälter auf der Kreisbahn eine vorrangige Anlagerung von Verschmutzungspartikeln am Behälterboden erfolgt. Um dem entgegen zu wirken, ist bei der bekannten Vorrichtung für jeden zu prüfenden Behälter ein Drehteller vorgesehen, auf dem der Behälter um seine Hochachse in Drehung versetzt wird, um das Fluid aufzuwirbeln. Trotz des dadurch bedingten hohen konstruktiven Aufwandes, lässt die Prüfungssicherheit zu wünschen übrig. Ein besonderer Nachteil besteht darin, dass die bekannte Vorrichtung für die Prüfung von Behältern, die nach dem BSF-Verfahren rationell in Form von sog. Behälterkarten mit mehreren, nebeneinanderliegenden und zusammenhängenden Behältern hergestellt sind, nicht brauchbar ist, weil eine Rotation jedes Behälters um dessen Hochachse nicht möglich ist.

In JP H06-160305 A ist eine Kontrolleinrichtung zum Überwachen einer Flüssigkeit auf Fremdkörper beschrieben, die eine Fördereinrichtung zur Beförderung eines zu überwachenden Behälters aufweist, Mittel zum Aufwirbeln der Fremdkörper in der in den Behälter eingefüllten Flüssigkeit, eine Beleuchtungseinrichtung zum Durchleuchten des Behälters, eine Aufnahmevorrichtung zum Erfassen des Zustandes innerhalb der Flüssigkeit mittels einer Kamera während eines festgelegten Zeitintervalls auf einem Bildschirm und eine Auswerteeinrichtung zur Feststellung der Fremdkörper in der Flüssigkeit auf dem Bildschirm durch die Kamera. Die Vorrichtung zum Aufwirbeln der Fremdkörper weist einen Ultraschallsender unter dem Behälter auf, wobei die Schwingungen des Ultraschallsenders auf den Behälter übertragen werden, um die Flüssigkeit in dem Behälter mit Ultraschall zu beaufschlagen und dadurch die Fremdkörper in der Flüssigkeit auf zu wirbeln, um sie fotografisch erfassen zu können.

Durch JP 2001-059822 A2 ist eine Kontrollvorrichtung für Fremdpartikel bekannt, bestehend aus einer zweidimensionalen, bildgebenden Kamera, einem transparenten Behälter mit Flüssigkeit, einem Schwingungserzeuger, um den Behälter in Schwingung zu versetzen, einer Beleuchtungseinrichtung und einem Reflektor. In einem ersten Schritt wird der Behälter in Schwingung versetzt, um in der Behälterflüssigkeit einen Schaum sowie einen Flüssigkeitstropfen zu erzeugen. Danach wird die Schwingung für den Behälter nach einer vorgebbaren Zeit to gestoppt und die Flüssigkeit im Behälter wird von der Kamera fotografiert. Nach Ablauf einer weiteren vorgebbaren Zeit t₁, wenn sich wieder die ursprünglichen Verhältnisse im Behälter eingestellt haben, wird dieser erneut fotografiert und wenn an derselben Stelle mit derselben Größe ein Teil in der Flüssigkeit erkannt wird, handelt es sich um einen Flüssigkeitstropfen und von dieser Position abweichende Teile innerhalb des Behälters werden als Fremdpartikel respektive Verschmutzungen erkannt.

Die EP 2 458 367 A1 betrifft eine Vorrichtung und ein Verfahren zur Erkennung fester Substanzen in einer flüssigen Phase, wobei die feste Substanz und die flüssige Phase als Gemisch in einem zumindest teilweise transparenten Behälter eingeschlossen sind und die Vorrichtung umfasst eine Prozessoreinheit und eine Kamera zur Erzeugung digitalisierter Aufnahmen als Arrays von Pixeln mit ihren zugehörenden Pixelwerten. Die bekannte Vorrichtung weist ferner eine Bewegungsvorrichtung zur Aufnahme des Behälters auf, mittels welcher Bewegungsvorrichtung der Behälter bewegbar und dem Gemisch dadurch kinetische Energie zuführbar ist und die Kamera ist zur bildlichen Erfassung des bewegten Gemischs auf eine transparente Stelle des Behälters gerichtet. Die mittels der Kamera während einer Aufnahmephase erfassten, digitalisierten Aufnahmen des bewegten Gemisches sind an die Prozessoreinheit übermittelbar. Dergestalt lassen sich mit der bekannten Lösung feste Substanzen in einer flüssigen Phase eines Behälters detektieren.

Aus US 2001/0033372 A1 geht eine Kontrollvorrichtung zur optischen Prüfung eines Flüssigkeitsbehälters hervor. Die Vorrichtung umfasst eine Einspannvorrichtung zur Festlegung eines Behälters und eine Fördereinrichtung oder einen Positioniertisch zum Ausrichten des festgelegten Behälters in Bezug auf eine Kamera. Darüber hinaus umfasst die Vorrichtung einen Schwingungserzeuger an der Kontrollstelle. Der Schwingungserzeuger versetzt den Behälter mit der Flüssigkeit in solche Schwingungen, dass Fremdkörper in der Flüssigkeit derart bewegt werden, dass sie bei einer optischen Kontrolle mit der Kamera festgestellt werden können.

Ausgehend von diesem Stand der Technik stellt sich die Erfindung die Aufgabe, eine Prüfvorrichtung zur Verfügung zu stellen, die eine rationelle Prüfung bei verbesserter Ergebnissicherheit ermöglicht.

Erfindungsgemäß ist diese Aufgabe durch eine Prüfvorrichtung gelöst, die die Merkmale des Patentanspruchs 1 in seiner Gesamtheit aufweist.

Gemäß dem kennzeichnenden Teil des Patentanspruchs 1 besteht eine wesentliche Besonderheit der Erfindung darin, dass dieHandhabungseinrichtung den jeweiligen zu prüfenden Behälter in eine horizontale Lage in die erste Station verbringt, bei der der Detektor unterhalb des Behälters und ein Emitter oberhalb dessen angeordnet ist, sowie in die zweite Station verbringt, bei der der Detektor oberhalb des Behälters und ein Emitter unterhalb desselben angeordnet ist.

Bei dieser Anordnung kann der Detektor, insbesondere in Form einer Kamera, von unten her auf die untere Seitenwand des Behälters fokussiert sein, während in der zweiten Station die Kamera von oben auf die Flüssigkeitsoberfläche fokussiert ist. Mit Sicherheit lassen sich dadurch Luftblasen, die fälschlich als Verschmutzungspartikel erkannt werden könnten, detektieren, weil sie sich an der bei Horizontallage oberen Seitenwand befinden und von anderen, tatsächlichen Schmutzpartikeln, die beweglich sind, unterscheiden lassen. Auch ist dadurch eine Unterscheidung zwischen bewegten Partikeln und zum Anhaften an Seitenwänden neigenden Partikeln, wie Kunststoffpartikeln, von in der Flüssigkeit freischwimmenden Partikeln ermöglicht.

Der jeweilige Behälter ist mittels einer Schwingungseinrichtung mit einer vorgebbaren Erregungsfrequenz derart in eine oszillierende Bewegung bringbar, dass die jeweiligen Verschmutzungspartikel im Fluid feststellbar sind. Wie Versuche gezeigt haben, führt die Oszillationsbewegung der Behälter zu freien Bewegungen von Partikeln mit je nach Art der Partikel unterschiedlichem Bewegungsmuster, so dass sich im Vergleich zu der bekannten Rotationsbewegung der Behälter nicht nur eine erhöhte Sicherheit der Detektion erreichen lässt, sondern auch eine bessere Unterscheidung der Partikelart ermöglicht ist. Insbesondere ist eine hohe Sicherheit der Detektion erreichbar, wenn die Erregungsfrequenz an die Eigenschaft des Fluids in geeigneter Weise angepasst ist, wobei bei hochviskosen Fluiden die Frequenz im niedrigen Frequenzbereich bis 2 kHz oder bei niedrigviskosen, dünnflüssigen Fluiden im höheren Bereich von 2 bis 10 kHz liegen kann.

Mit besonderem Vorteil kann die Schwingungsebene der oszillierenden Bewegung innerhalb der Längsausrichtung, vorzugsweise entlang der Mittenebene des jeweiligen Behälters, erfolgen, wobei der Behälter Bestandteil einer kartenförmig verbundenen Mehrbehälteranordnung sein kann.

Bei bevorzugten Ausführungsbeispielen ist die Erregungsfrequenz derart gewählt, dass in Abhängigkeit der Viskosität des fluidischen Behälterinhalts größere Luftblasen an ihrem Ort im Fluid verbleiben, sich der jeweils zu detektierende Verschmutzungspartikel jedoch innerhalb des Fluids bewegt. Dadurch lassen sich Ergebnisfehler aufgrund einer Detektion von Luftblasen vermeiden. Die Erregungsfrequenz lässt sich mit Vorteil auch derart einstellen, dass die Bildung von Luftblasen vermieden oder minimiert ist.

Die Sensoreinrichtung kann über zumindest einen Emitter verfügen, der Strahlen, wie sichtbares Licht, Infrarotlicht, Laserlicht oder Röntgenstrahlen, abgibt, die zumindest die Behälterwand und das Fluid durchqueren und die nach Auftreffen auf einen gegenüberliegend angeordneten Detektor ein mittels einer Auswerteeinrichtung auswertbares Messsignal erzeugen. Die Wahl der Strahlungsart kann abhängig von der Transparenz oder Opazität der Behälterwand in geeigneter Weise getroffen werden. Beispielsweise können Röntgenstrahlen bei opaker Behälterwand zum Einsatz kommen.

Bei besonders vorteilhaften Ausführungsbeispielen macht vorzugsweise nach dem Oszilliervorgang des mit Fluid befüllten Behälters ein als Kamera-Aufnahmegerät ausgebildeter Detektor mehrere Aufnahmen von den sich im Fluid jeweils bewegenden oder bewegten Verschmutzungspartikeln, wobei die Auswerteeinheit Bildausschnitte miteinander abgleicht, die einmal ohne Verschmutzungspartikel und einmal mit Verschmutzungspartikel aufgenommen sind. Der Abgleich mehrerer Aufnahmen ermöglicht eine hohe Ergebnissicherheit. Die Aufnahmen der Aufnahmeserie lassen sich in kurzen Zeitabständen durchführen, beispielsweise innerhalb einer Sekunde, so dass die erfindungsgemäße Vorrichtung für hohe Produktionsgeschwindigkeiten geeignet ist.

Die Detektion von Schmutzpartikeln stützt sich auf die Erkennung einer freien Bewegung von Teilchen im Behälter, der sich nach der oszillierenden Bewegung im Stillstand befindet. Unmittelbar nach dem Stillsetzen der Oszillation ist das Fluid jedoch noch in Bewegung und erzeugt in Aufnahmen bewegliche Schatten, die zu fehlerhaftem Prüfergebnis führen können. Im Hinblick hierauf ist bei vorteilhaften Ausführungsbeispielen der Erfindung die Anordnung so getroffen, dass mittels der Handhabungseinrichtung der Behälter für eine vorgebbare Beruhigungszeit so lange in einer Ruheposition gehalten ist, bis das Fluid im Behälter weitestgehend zur Ruhe kommt.

Die Handhabungseinrichtung kann mit karussellartig angeordneten Handhabungshilfen ausgerüstet sein, mittels deren Behältererzeugnisse aus der Fertigungslinie ein- und ausschleusbar sind. Die Prüfvorrichtung kann dadurch Bestandteil der Fertigungslinie der nach dem BFS-Verfahren hergestellten Behältererzeugnisse bilden.

Bei der Auswerteeinheit können für die Auswertung der Messsignale computergesteuerte Bildverarbeitungsverfahren eingesetzt sein, wie sie im Stand der Technik als Grauwerttransformation, als Punktoperation und/oder Überblendverfahren üblich sind und auf an sich bekannten Algorithmen basieren.

Nachstehend ist die Erfindung anhand eines in der Zeichnung dargestellten Ausführungsbeispiels im Einzelnen erläutert. Es zeigen:
- Fig. 1: eine skizzenhaft und in der Art einer Blockdarstellung vereinfacht gezeichnete Darstellung eines Ausführungsbeispiels der erfindungsgemäßen Prüfvorrichtung;
- Fig. 2: eine schematisch vereinfachte perspektivische Schrägansicht von Funktionselementen des Ausführungsbeispiels;
- Fig. 3: eine näherungsweise in natürlicher Größe einer praktischen Ausführungsform gezeichnete Seitenansicht eines Teils einer Handhabungseinrichtung des Ausführungsbeispiels der Vorrichtung; und
- Fig. 4: eine Bildserie mit vier in einer Prüfstation der Vorrichtung aufgenommenen Bildern einer Behälterkarte mit vier Ampullen.

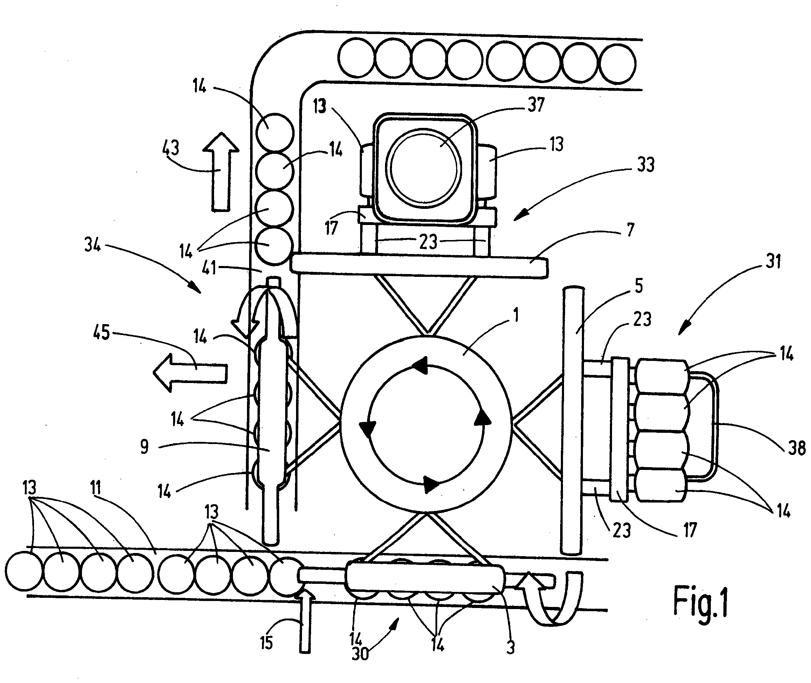

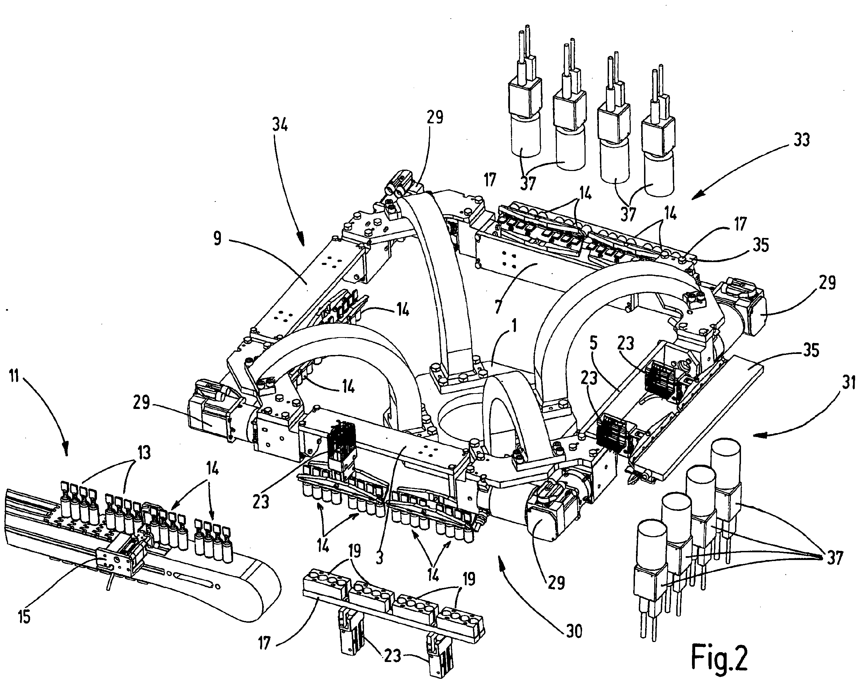

In Fig. 1 ist ein zentrales Handhabungskarussell mit 1 bezeichnet, mittels dessen Greifer 3, 5, 7 und 9 entgegen dem Uhrzeigersinn bewegbar sind. Mittels eines Bandförderers 11 werden zu prüfende Ampullen 13 (Fig. 2) aufrecht stehend als Behälterband dem in einer Beschickungsstation 30 befindlichen Greifer 3 zugeführt, der sich am Anfang der vom Handhabungskarussell 1 gebildeten Prüfstrecke befindet. Unmittelbar vor dem Greifer 3 trennt ein Separator 15 vom Behälterband jeweils Behälterkarten mit im vorliegenden Fall vier Ampullen 13 ab.

Die Greifer 3, 5, 7, 9 weisen jeweils eine Trägereinheit 17 auf, von denen in Fig. 2 eine in vom Karussell 1 abgenommener Lage neben dem Bandförderer 11 dargestellt ist. Wie aus dieser Darstellung zu ersehen ist, weist jede Trägereinheit 17 vier Ampullenaufnahmen 19 auf, in deren jeder eine Behälterkarte 14 mit vier Ampullen 13 aufnehmbar ist. Dabei befinden sich die Ampullen 13 mit ihrem Verschlussteil, das, wie Fig. 2 zeigt, einen Drehknebel aufweist, innerhalb der Aufnahme 19, während der das Fluid enthaltende Ampullenkörper freiliegend ist, wie dies in der Fig. 2 bei dem Greifer 3 sichtbar ist. Wie Fig. 2 ebenfalls zeigt, ist die Position des Greifers 3 derart, dass die Ampullen 13 vertikal und aufrechtstehend orientiert sind, also in gleicher Position angeordnet sind wie auf dem Bandförderer 11.

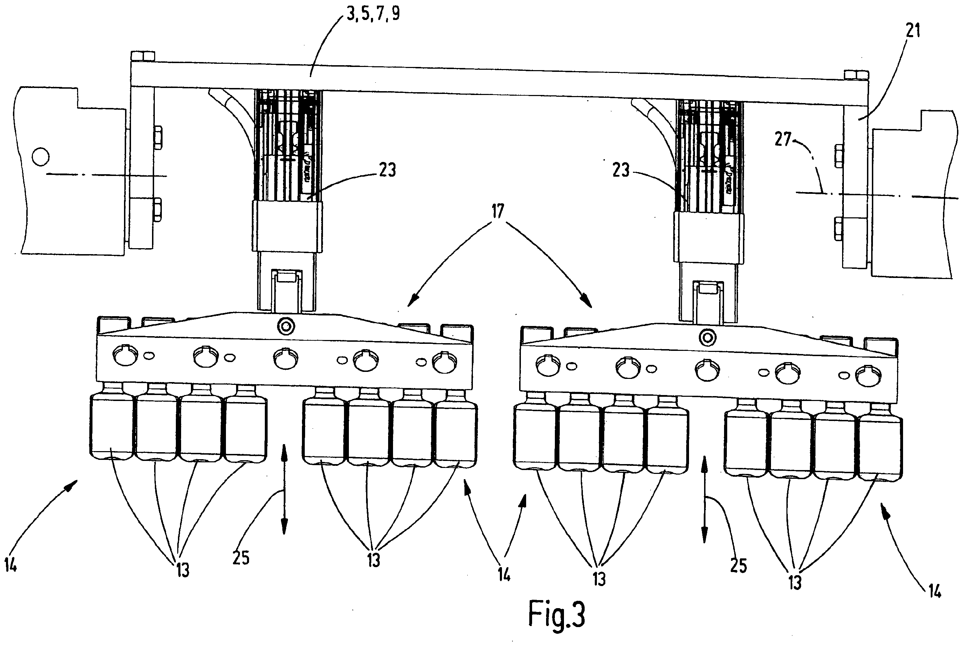

Zwischen der Trägereinheit 17 und der Tragstruktur 21 (Fig. 3) jedes Greifers 3, 5, 7, 9 befindet sich ein Paar von im Abstand angeordneter, elektrisch betätigbarer Schwingungserzeuger 23. Diese erzeugen im Betrieb eine Schwingung, deren Schwingungsrichtung in Fig. 3 mit Doppelpfeil 25 verdeutlicht ist und die Ampullen 13 in ihrer Längsrichtung hin und her bewegt.

Die Tragstruktur 21 jedes Greifers 3, 5, 7, 9 ist um eine horizontale Schwenkachse 27, siehe Fig. 3, drehbar. Die Tragstruktur 21 jedes Greifers 3, 5, 7, 9 ist hierfür mit einem Getriebemotor 29 (Fig. 2) verbunden. Nach Bestücken des Greifers 3 mit vier Behälterkarten 14 von je vier vertikal nach unten hängenden Ampullen 13, wie es in Fig. 2 gezeigt ist, bewegt das Karussell 1 den Greifer 3 mit einer entgegen dem Uhrzeigersinn um 90° erfolgenden Drehbewegung, so dass der Greifer 3 in eine auf eine erste Prüfstation 31 ausgerichtete Lage kommt, in der sich zuvor der Greifer 5 befunden hat, der sich gleichzeitig in eine zweite Prüfstation 33 bewegt. Während diesem Drehschritt bewegt der Getriebemotor 29 des Greifers 3 die Tragstruktur 21 um 90°, so dass an der ersten Prüfstation 31 die Behälterkarten 14 mit den Ampullen 13 in eine horizontale Position gelangen, bei der die Behälterkörper vom Karussell 1 weg gerichtet sind. In der ersten Prüfstation 31 befindet sich oberhalb der Ampullen 13 eine Beleuchtungseinrichtung in Form einer LED-Platte 35, die sich über den gesamten Bereich der Oberseite der horizontal liegenden Ampullen 13 erstreckt, siehe Fig. 2, wo lediglich die der ersten Prüfstation 31 zugehörige LED-Platte 35 sichtbar ist. Unterhalb der Ampullen 13 sind Kameras 37 als Detektoren für das von der LED-Platte 35 ausgesandte und die horizontal liegenden Ampullen 13 von oben nach unten durchdringende Licht vorgesehen. Dabei ist für jede der vier Behälterkarten 14, die jede vier Ampullen 13 aufweisen, jeweils eine Kamera 37 vorgesehen. Bei der vereinfachten Blockdarstellung von Fig. 1 sind die der ersten Prüfstation 31 zugehörigen vier Kameras 37 durch einen mit 38 bezeichneten Kamerablock verdeutlicht, und anstelle der vier Behälterkarten 14 mit je vier Ampullen 13 sind für jede Behälterkarte 14 lediglich eine Ampulle 13 angedeutet.

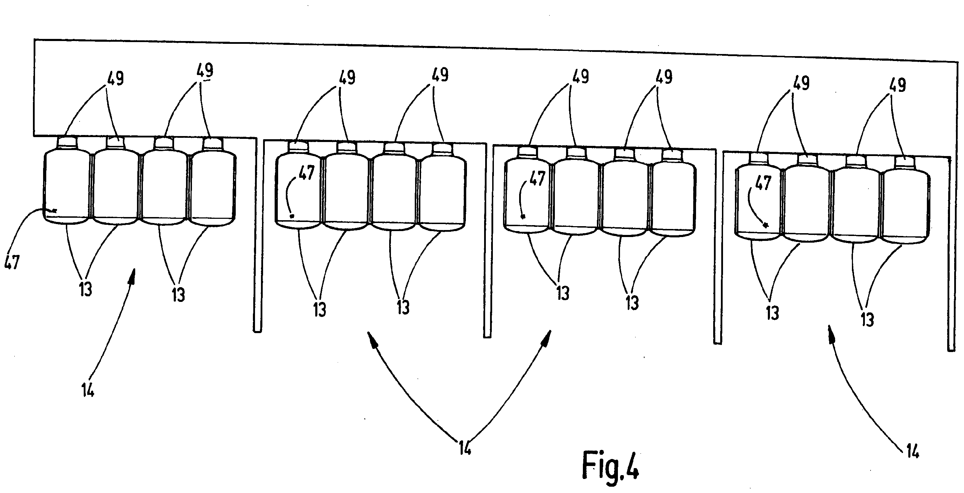

Im Betrieb versetzen die Schwingungserzeuger 23 bei Erreichen der ersten Prüfstation 31 die Trägereinheit 17 mit den Ampullen 13 in Schwingung, bevor Aufnahmen durch die Kameras 37 betätigt werden. Dies erfolgt nach Stillsetzen der Schwingungserzeuger 23, wobei, bevor jede Kamera 37 eine erste Aufnahme macht, eine Beruhigungszeit verstreicht, innerhalb der das in Schwingung versetzte Fluid der Ampullen 13 zur Ruhe kommt, so dass lediglich frei schwimmende, zu detektierende Partikel in Bewegung sind bzw. ihre Position verändert haben. Sich bewegende Schatten bei in Bewegung befindlichem Fluid könnten sonst fälschlicherweise als Schmutzpartikel detektiert werden. Unmittelbar nach Beruhigung der Fluidbewegung, was etwa 500 ms nach Beendigung der Oszillation erfolgt, tätigen die Kameras 37 eine erste Aufnahme von der zugeordneten Behälterkarte 14, wobei die vier Ampullen 13 jeder Karte 14 von oben nach unten durchleuchtet sind. An die erste Aufnahme schließen sich in kurzen Zeitabständen weitere Vibrations- und Aufnahmezyklen an, beispielsweise im Bereich von 200 ms, drei weitere Aufnahmen an, so dass die gesamte Aufnahmeserie von vier Aufnahmen, einschließlich der vorausgehenden Beruhigungsperiode, etwa innerhalb einer Sekunde, maximal innerhalb von zwei oder drei Sekunden abgeschlossen ist. Die Fig. 4 zeigt ein Beispiel einer entsprechenden Serie von vier Aufnahmen, die von einer der vier Kameras 37 aufgenommen ist, so dass also vier Aufnahmen der gleichen Behälterkarte 14 gezeigt sind.

Anschließend wird mit einer weiteren Drehbewegung des Karussells 1 um 90° der jeweilige Greifer aus der ersten Prüfstation 31 zur zweiten Prüfstation 33 bewegt, wobei die Ampullen 13 in der gleichen Horizontalposition verbleiben. Die Kameras 37 befinden sich in der zweiten Greifstation 33, wie aus Fig. 2 zu ersehen ist, oberhalb der Trägereinheit 17 mit den Ampullen 13, während sich die beleuchtende LED-Trägerplatte 35 unterhalb befindet, so dass die Kameras 37 die Strahlung detektieren, die die Ampullen 13 von unten nach oben durchdringt. Der Prüfzyklus verläuft in der zweiten Prüfstation 33 in gleicher Weise wie bei der ersten Prüfstation 31, beinhaltet also eine Oszillation, eine sich daran anschließende Dämpfungsphase im Bereich von etwa 500 ms sowie daran anschließend eine Aufnahmenserie mit vier Aufnahmen und Vibrationszyklen.

Anschließend bewegt sich bei weiterer Drehung des Karussells 1 um 90° der zuvor in der zweiten Prüfstation 33 befindliche Greifer, bei der Darstellung von Fig. 2 ist dies der Greifer 7, in die an der Prüfstrecke nächstfolgende Ausgabestation 34. Während der Bewegung bewirkt der zugehörige Getriebemotor 29 eine Schwenkbewegung um die Achse 27 (Fig. 3), so dass die Behälterkarten 14 in der Ausgabestation 34 vertikal nach unten hängen, also gleich orientiert sind wie in der Beschickungsstation 30. Wenn die Auswertung der in erster Prüfstation 31 und zweiter Prüfstation 33 gemachten Aufnahmen ergeben hat, dass die Ampullen 13 fehlerfrei sind, legt der in die Ausgabestation 34 bewegte Greifer, bei der Darstellung der Figuren ist dies der Greifer 9, die Behälterkarten 14 auf einem Ausgabeförderer 41 ab, der lediglich in Fig. 1 schematisiert angedeutet ist. Der Ausgabeförderer 41 bewegt die fehlerfreien Behälterkarten 14 in der mit Pfeil 43 angegebenen Transportrichtung. Wenn die Prüfung das Vorhandensein eines Schmutzpartikels ergeben hat, unterbleibt die Ablage einer die fehlerhafte Ampulle 13 enthaltenden Behälterkarte 14 auf dem Ausgabeförderer 41. Stattdessen wird diese Behälterkarte 14, wie in Fig. 1 mit Pfeil 45 verdeutlicht ist, aus der Förderbahn des Ausgabeförderers 41 herausgenommen und als Ausschuss, wie in Fig. 1 mit Pfeil 45 angedeutet ist, seitlich weg bewegt.

Bei einer Dauer der jeweiligen Prüfsequenz der Prüfstationen 31 und 33 von etwa 1.500 ms, einschließlich einer Beruhigungsphase von 500 ms und anschließender Aufnahmeserie lässt sich die erfindungsgemäße Vorrichtung mit einem Durchsatz an zu prüfenden Ampullen 13 betreiben, der der Produktionsgeschwindigkeit üblicher BFS-Anlagen zum Erzeugen ampullenartiger Behältererzeugnisse entspricht. Die erfindungsgemäße Prüfvorrichtung lässt sich daher unmittelbar in die Fertigungslinie integrieren.

Bei den unterschiedlichen Bewegungsmustern, die sich bei Partikeln verschiedener Art und Dichte, wie Metallpartikeln oder Kunststoffpartikeln, zeigen, nachdem sich das Fluid nach vorausgegangener Oszillation beruhigt hat, wird bei der erfindungsgemäßen Vorrichtung eine hohe Prüfungssicherheit insbesondere dadurch erreicht, dass Aufnahmeserien einmal bei oberhalb der horizontalen Ampullen 13 gelegener Kameraposition und Fokussierung auf die Fluidoberfläche und einmal mit unterhalb gelegener Kameraposition mit Fokussierung auf die untere Behälterwand getätigt werden. Metallpartikel, die beispielsweise in Form von Abrieb aus der BFS-Herstelleinrichtung stammen, befinden sich gewöhnlich aufgrund ihrer Dichte im Bereich der unteren Behälterwand, sind nicht transparent und kontrastreich und durch die untere Kamera 37, die auf die Behälterwand fokussiert ist, gut detektierbar. Kunststoffpartikel, wie PP-Material, das aus dem Behältermaterial beim BFS-Füllverfahren stammen kann, ist halb transparent und weniger kontrastreich, schwimmt bevorzugt an der Fluidoberfläche und ist, trotz geringem Kontrast von der auf die Fluidoberfläche fokussierten oberen Kamera 37 sicher detektierbar. In der Nähe einer Behälterwand schwimmende Kunststoffpartikel neigen auch dazu, von der benachbarten Wand sozusagen angezogen zu werden und an der Wand zu haften, wodurch sie sich als Kunststoffteilchen zu erkennen geben.

Die Fig. 4 zeigt die Aufnahmeserie einer einzelnen Behälterkarte 14. Bei dem gezeigten Beispiel, das mit unten liegender und auf die untere Behälterwand der Ampullen 13 fokussierter Kamera aufgenommen ist, ist ein metallischer Partikel 47 erkennbar, der sich in der Bildfolge nach rechts und geringfügig in Richtung auf den Ampullenhals 49 bewegt. Die in Fig. 4 gezeigte Behälterkarte 14 ist daher in der Ausgabestation 34 aus der Förderbahn des Ausgabeförderers 41 herauszunehmen und in Richtung des Pfeiles 45 auszutragen.

Für die Auswertung der in Fig. 4 beispielhaft gezeigten Bildserien sind die im Stand der Technik bekannten Bilderkennungsverfahren einsetzbar, wie Grauwerttransformation, Punktoperatoren und/oder Überblendverfahren. Dabei erfolgt ein Abgleich der einmal von unten nach oben und einmal von oben nach unten aufgenommenen Bildserien. Zudem kann ein Vergleich mit Referenzaufnahmen durchgeführt werden, die von verschmutzungsfreien Behältern aufgenommen sind und eine Kalibrierung des benutzten Bilderkennungssystems ermöglichen.

## Patentansprüche

1. Prüfvorrichtung zum Überprüfen von Behältererzeugnissen (13), vorzugsweise aus Kunststoffmaterialien bestehend und nach dem Blasform-, Füll- und Siegelverfahren hergestellt, die mit Fluid befüllt sind, das herstellbedingt Verschmutzungspartikel aufweisen kann, die sich bei ruhendem Behälter (13) an der Behälterwand ablagern und die bei Bewegung des Behälters (13) im Fluid freischwimmend in Erscheinung treten und/oder durch die Bewegung ihre Position verändern und dergestalt mittels einer Sensoreinrichtung (37) detektierbar sind, wobei die Prüfvorrichtung eine Handhabungseinrichtung (3, 5, 7, 9), zwei Stationen (31, 35) mit Detektoren (37) und eine Schwingungseinrichtung (23) aufweist, und mittels der Schwingungseinrichtung (23) der jeweilige Behälter (13) mit einer vorgebbaren Erregungsfrequenz derart in eine oszillierende Bewegung bringbar ist, dass die jeweiligen Verschmutzungspartikel (47) im Fluid feststellbar sind, **dadurch gekennzeichnet, dass** die Handhabungseinrichtung (3, 5, 7, 9) den jeweiligen zu prüfenden Behälter (13) in eine horizontale Lage in die erste Station (31) verbringt, bei der der Detektor (37) unterhalb des Behälters (13) und ein Emitter (35) oberhalb desselben angeordnet ist, sowie in die zweite Station (33) verbringt, bei der der Detektor (37) oberhalb des Behälters (13) und ein Emitter (35) unterhalb desselben angeordnet ist.

2. Prüfvorrichtung nach Anspruch 1, **dadurch gekennzeichnet, dass** die Schwingungsebene der oszillierenden Bewegung innerhalb der Längsausrichtung, vorzugsweise entlang der Mittenebene des Behälters (13), erfolgt.

3. Prüfvorrichtung nach Anspruch 1 oder 2, **dadurch gekennzeichnet, dass** der Behälter (13) Bestandteil einer kartenförmig verbundenen Mehrbehälteranordnung (14) ist.

4. Prüfvorrichtung nach einem der vorstehenden Ansprüche, **dadurch gekennzeichnet, dass** die Erregungsfrequenz derart gewählt ist, dass in Abhängigkeit der Viskosität des fluidischen Behälterinhalts größere Luftblasen an ihrem Ort im Fluid verbleiben und der jeweils zu detektierende Verschmutzungspartikel (47) sich innerhalb des Fluids bewegt.

5. Prüfvorrichtung nach einem der vorstehenden Ansprüche, **dadurch gekennzeichnet, dass** die Sensoreinrichtung zumindest über einen Emitter (35) verfügt, der Strahlen, wie sichtbares Licht, Infrarotlicht, Laserlicht oder Röntgenstrahlen, abgibt, die zumindest die Behälterwand und das Fluid durchqueren und die nach Auftreffen auf einen gegenüberliegend angeordneten Detektor (37) ein mittels einer Auswerteeinheit auswertbares Messsignal erzeugen.

6. Prüfvorrichtung nach einem der vorstehenden Ansprüche, **dadurch gekennzeichnet, dass** nach dem Oszilliervorgang des mit Fluid befüllten Behälters (13) ein als Kamera-Aufnahmegerät (37) ausgebildeter Detektor mehrere Aufnahmen von den sich im Fluid jeweils bewegenden Verschmutzungspartikeln (47) macht und dass die Auswerteeinheit Bildausschnitte miteinander abgleicht, die einmal ohne Verschmutzungspartikel (47) und einmal mit Verschmutzungspartikel (47) aufgenommen sind.

7. Prüfvorrichtung nach einem der vorstehenden Ansprüche, **dadurch gekennzeichnet, dass** mittels der Handhabungseinrichtung (5, 7) der Behälter (13) für eine vorgebbare Beruhigungszeit so lange in einer Ruheposition gehalten ist, bis das Fluid im Behälter (13) zur Ruhe kommt.

8. Prüfvorrichtung nach einem der vorstehenden Ansprüche, **dadurch gekennzeichnet, dass** mittels der Handhabungseinrichtung (3, 5, 7, 9) und deren karussellartig angeordneten Handhabungshilfen (1) Behältererzeugnisse (13) aus der Fertigungslinie ein- und ausschleusbar sind.

9. Prüfvorrichtung nach einem der vorstehenden Ansprüche, **dadurch gekennzeichnet, dass** die Auswerteeinheit für die Messsignalauswertung computerisierte Bildverarbeitungsverfahren einsetzt, wie die Grauwerttransformation, Punktoperatoren und/oder Überblendverfahren.

## Claims

1. Control system for the investigation of container products (13), preferably consisting of plastics materials and manufactured using the blow-fill-seal method, which are filled with fluid that may comprise dirt particles caused by the manufacturing process which are deposited on the container wall when the container (13) is stationary and are seen to be floating freely in the fluid when the container (13) is moved and/or change their position as a result of the motion and as such can be detected with a sensor device (37), the control system comprising a handling device (3, 5, 7, 9), two stations (31, 35) with detectors (37) and a vibration device (23), the respective container (13) being able to be moved in an oscillating motion with a pre-definable excitation frequency by means of the vibration device (23) such that the respective dirt particles (47) can be detected in the fluid, **characterised in that** the handling device (3, 5, 7, 9) moves the respective container (13) to be investigated into a horizontal position in the first station (31), in which the detector (37) is arranged beneath the container (13) and an emitter (31) is arranged above said container, and into the second station (33), in which the detector (37) is arranged above the container (13) and an emitter (35) is arranged beneath said container.

2. Control system according to claim 1, **characterised in that** the vibration plane of the oscillating motion lies within the longitudinal orientation, preferably along the centre plane of the container (13).

3. Control system according to either claim 1 or claim 2, **characterised in that** the container (13) is part of a multi-container arrangement (14) connected in card form.

4. Control system according to any one of the preceding claims, **characterised in that** the excitation frequency is selected such that larger air bubbles remain in place in the fluid as a function of the viscosity of the fluidic container contents and the respective dirt particle (47) to be detected moves inside the fluid.

5. Control system according to any one of the preceding claims, **characterised in that** the sensor device has at least one emitter (35), which emits rays, such as visible light, infrared light, laser light or X-rays, which pass through at least the container wall and the fluid and generate a measurement signal that can be evaluated by means of an evaluation unit after coming into contact with a detector (37) arranged on the opposite side.

6. Control system according to any one of the preceding claims, **characterised in that**, after the oscillating action of the container (13) filled with fluid, a detector designed as a camera recording device (37) takes a plurality of pictures of the respective dirt particles (47) moving in the fluid and **in that** the evaluation unit compares image sections, one taken without dirt particles (47) and one with dirt particles (47), with one another.

7. Control system according to any one of the preceding claims, **characterised in that** the container (13) is maintained in a stationary position by means of the handling device (5, 7) for a pre-definable settling period until the fluid in the container (13) comes to rest.

8. Control system according to any one of the preceding claims, **characterised in that** container products (13) from the production line can be transferred in and out by means of the handling device (3, 5, 7, 9) and its handling aids (1), which are arranged in the form of a carousel.

9. Control system according to any one of the preceding claims, **characterised in that** the evaluation unit uses computerised image processing methods to evaluate the measurement signal, such as grey level transformation, dot operators and/or blending methods.

## Revendications

1. Système d'examen pour le contrôle de produits (13) formant récipients, de préférence en matières plastiques et fabriqués par le procédé de moulage par soufflage, remplissage et scellement, qui sont emplis de fluide pouvant, en raison de la fabrication, présenter des particules d'impureté, qui, lorsque le récipient (13) est au repos, se déposent sur la paroi du récipient et qui apparaissent flottant librement dans le fluide, lorsque le récipient (13) est mis en mouvement et/ou qui, par la mise en mouvement, modifient leur position et ainsi peuvent être détectées au moyen d'un dispositif (37) de capteur, le système d'examen ayant un dispositif (3, 5, 7, 9) de manœuvre, deux postes (31, 35) ayant des détecteurs (37) et un dispositif (23) d'oscillation et, au moyen du dispositif (23) d'oscillation, le récipient (13) respectif peut, à une fréquence d'excitation pouvant être donnée à l'avance, être mis en un mouvement oscillant, de manière à pouvoir constater les particules (47) d'impureté dans le fluide, **caractérisé en ce que** le dispositif (3, 5, 7, 9) de manœuvre met le récipient (13) à examiner dans une position horizontale dans le premier poste (31), où le détecteur (37) est en dessous du récipient (13) et un émetteur (35) au-dessus de celui-ci, ainsi que le met, dans le deuxième poste (33), où le détecteur (37) est au-dessus du récipient (13) et un émetteur (35) en dessous de celui-ci.

2. Système d'examen suivant la revendication 1, **caractérisé en ce que** le plan d'oscillation du mouvement oscillant a lieu dans la direction longitudinale, de préférence suivant le plan médian du récipient (13).

3. Système d'examen suivant la revendication 1 ou 2, **caractérisé en ce que** le récipient (13) fait partie d'un agencement (14) de plusieurs récipients reliés sous la forme d'une carte.

4. Système d'examen suivant l'une des revendications précédentes, **caractérisé en ce que** la fréquence d'excitation est choisie de manière à ce que, en fonction de la viscosité du contenu fluidique du récipient, des bulles d'air assez grandes restent à leur emplacement dans le fluide et la particule (47) d'impureté à détecter se déplace au sein du fluide.

5. Système d'examen suivant l'une des revendications précédentes, **caractérisé en ce que** le dispositif de capteur dispose au moins d'un émetteur (35), qui émet des rayonnements, comme de la lumière visible, de la lumière infrarouge, de la lumière laser ou des rayons X, qui traversent au moins la paroi de récipient et le fluide et qui, après incidence sur un détecteur (37) disposé à l'opposé, produisent un signal de mesure pouvant être exploité au moyen d'une unité d'exploitation.

6. Système d'examen suivant l'une des revendications précédentes, **caractérisé en ce qu'**après le processus d'oscillation du récipient (13) rempli de fluide, un détecteur, constitué d'un appareil (37) de prise de vue photographique, prend plusieurs enregistrements des particules (47) d'impureté se déplaçant, respectivement, dans le fluide et **en ce que** l'unité d'exploitation ajustent entre elles des parties de l'image, qui sont enregistrées une fois sans particule (47) d'impureté et une fois avec des particules (47) d'impureté.

7. Système d'examen suivant l'une des revendications précédentes, **caractérisé en ce qu'**au moyen du dispositif (5, 7) de manœuvre, le récipient (13) est maintenu, pendant un temps de tranquillisation pouvant être donné à l'avance, dans une position de repos, jusqu'à ce que le fluide dans le récipient (13) vienne en repos

8. Système d'examen suivant l'une des revendications précédentes, **caractérisé en ce qu'**au moyen du dispositif (3, 5, 7, 9) de manœuvre et de ses auxiliaires (1) de manœuvre, disposés à la manière d'un carrousel, des produits (13) formant récipient peuvent être inclus et exclus de la ligne de fabrication.

9. Système d'examen suivant l'une des revendications précédentes, **caractérisé en ce que** l'unité d'exploitation utilise, pour l'exploitation des signaux de mesure, des procédés de traitement d'image informatisés, comme la transformation de valeurs de gris, des égalisations d'histogramme et/ou un procédé de morphose.
